# FASCICULE DE BREVET EUROPEEN

(11) **EP 1 312 853 B1**
(45) Date de publication et mention de la délivrance du brevet: **21.03.2007**
(21) Numéro de dépôt: 02358024.4
(22) Date de dépôt: 07.11.2002
(51) Int. Cl.: F16P 3/14

(54) **Système optique auto-ajustable de sécurité pour zone de travail dangereuse**
Selbsteinstellendes, optisches Sicherheitssystem für gefährlichen Arbeitsbereich
Self-adjusting optical security system for dangerous working area

(30) Priorité: 14.11.2001 FR 0114686
(43) Date de publication de la demande: 21.05.2003
(73) Titulaire: Alligier, Marc, 13003 Marseille (FR)
(72) Inventeur: Alligier, Marc, 13003 Marseille (FR)

(56) Documents cités:
- EP-A- 0 179 252
- DE-A- 4 414 434
- DE-A- 10 000 287
- PATENT ABSTRACTS OF JAPAN vol. 1998, no. 03, 27 février 1998 (1998-02-27) & JP 09 303685 A (TAKAMURA NOBUAKI), 28 novembre 1997 (1997-11-28)
- PATENT ABSTRACTS OF JAPAN vol. 017, no. 500 (M-1477), 9 septembre 1993 (1993-09-09) & JP 05 125748 A (NIPPON TELEGR & TELEPH CORP), 21 mai 1993 (1993-05-21)
- PATENT ABSTRACTS OF JAPAN vol. 1997, no. 09, 30 septembre 1997 (1997-09-30) & JP 09 125466 A (YUTANI HEAVY IND LTD), 13 mai 1997 (1997-05-13)
- PATENT ABSTRACTS OF JAPAN vol. 1995, no. 04, 31 mai 1995 (1995-05-31) & JP 07 023372 A (CLARION CO LTD), 24 janvier 1995 (1995-01-24)

## Description

L'invention concerne un système de détection pour la protection des êtres humains, principalement des personnes travaillants à proximité de zones dangereuses dont le risque n'est pas matérialisé dans la zone de détection, (par exemple les tapis roulants menant vers des broyeurs ou des presses hydrauliques, des incinérateurs, les personnes travaillants autour pouvant chuter). Le système de protection est basé sur le suivi en temps réel de la position des personnes sur une séquence d'image vidéo acquise par des caméras couleurs dans le spectre visible, à partir de la reconnaissance de la couleur particulière de leurs vêtements de travail, par exemple les éléments jaune fluorescent de signalisation ; cette couleur étant très remarquable dans les sites industriels. Néanmoins, ce système étant libre de toutes contraintes extérieures industrielles, il peut sécuriser tous types de machines-outils dangereuses pour l'homme par l'adaptation de la couleur à détecter, le principe de la détection restant le même quelle que soit la couleur à détecter. Il existe déjà des systèmes basés sur un principe similaire ( par exemple une caméra vidéo pour surveillance Brevet N° : EP 0 179 252 A2 ), mais où la différence principale par rapport à l'invention décrite ici, est l'absence de danger identifié dans la zone de détection ; dans le brevet pré-cité, par un objet en mouvement (Bras de robot), alors que c'est uniquement par le suivi de l'être humain que l'on peut anticiper un risque potentiel pour celui-ci et non pas, comme décrit dans le brevet pré cité, la vérification d'un écart fixe entre l'objet considéré comme dangereux et l'être humain. L'invention représentée par le brevet N° : EP 0 179 252 A2 est inapplicable dans le problème résolu par l'invention décrite ci-après.
La protection du personnel dans des sites industriels soumis à un environnement perturbé par des pollutions sonores, électromagnétiques ou poussiéreuses est un problème où les systèmes de détection sont soumis à d'importantes contraintes, car peu de systèmes sont insensibles à cet environnement. Lorsque le système de protection est de conception simple, le personnel rencontre un frein à la réalisation de son métier ( cas du câble fixé sur les personnes cf. description de l'existant ) et donc, le système de sécurité est inhibé au détriment de sa protection lors du travail sur zones dangereuses. Le cas du tapis roulant est particulier car très contraignant en ce qui concerne la détection : le tapis roulant transporte des matériaux de différentes couleurs, formes, tailles, et matières. Le personnel peut circuler à proximité du tapis roulant, et même y être dessus lorsque le tapis avance à vitesse très lente. C'est notamment le cas des sites de tris et de recyclage papiers, cartons, bois, boites de conserves, plastiques ou autres déchets recyclables. Suivant le contexte du site industriel, ce personnel, à la suite d'un malaise ou d'un accident, peut tomber sur le tapis roulant, et se retrouver enfoui ou non par les matériaux circulants sur celui-ci, puis être entraîné vers les broyeurs ou presses hydrauliques en fonctionnement. Le cas le plus défavorable se trouve dans les usines de tris et de recyclage de papier, carton : Le tapis roulant se trouve entre 50 et 90 centimètres en dessous du niveau du sol, afin de pouvoir le charger directement à partir d'une benne de camion ou un mini tracto-pelle, le personnel pouvant être même amené à descendre sur le tapis roulant afin de trier les matériaux indésirables présents dans les déchets à recycler.
Dans la description de ce système, j'utilise pour exemple général le cas d'une protection de personnel situé sur un site de recyclage, cas le plus contraignant ( Couleur du papier varié, personnel à détecter en mouvement aléatoire par rapport aux objets transportés sur le tapis, variations de la luminosité en fonction de la poussière en suspension et de l'heure et date du jour dans l'année ).
Les systèmes de protection généralement utilisés pour détecter ou empêcher une chute sur le tapis roulant sont les suivants :

### ( Systèmes déjà implantés ou en cours de test )

1. Système de harnais pour les employés avec un lien glissant sur un câble libre. Les employés sont reliés par un ombilical à un câble. L'inconvénient de ce système est l'aggravation des blessures car l'homme risque d'être traîné sur le tapis. De plus ce câble est une entrave aux mouvements du personnel donc il entraîne une probabilité de chute supérieure.
2. Un câble est tendu au-dessus du tapis en aval de la zone de travail afin que la personne, qui tombe sur le tapis roulant, puisse attraper ce filin qui est relié à un arrêt d'urgence du tapis roulant. Le principal problème de ce système est qu'il faut que la personne soit consciente.
3. Un système de détection évolué porté par l'employé permettant sa détection dans une zone prédéfini du tapis roulant. Cet élément peut être de nature émettrice ( par exemple un mini-émetteur ) ou passive ( par exemple une ceinture magnétique ou une puce de signalisation). Les problèmes de ces systèmes restent le port d'objet annexe sur les vêtements des employés, imposant une contrainte supplémentaire à leurs habitudes de travail ou entraînant un coût supérieur. Le risque de perdre l'élément de détection, sa destruction suite à un écrasement ou les perturbations électromagnétiques des moteurs des tapis et broyeurs engendrent un risque de fausse détection voire d'absence de détection.
Les contraintes sur le personnel devant être réduites au maximum pour éviter des « oublis volontaires ou involontaires », les solutions précédentes ne permettent pas de remplir de façon satisfaisante les conditions de surveillance et de protection du personnel, de façon purement passive.

La présente invention évite le maximum de contrainte sur le personnel ( pas de modification de leur façon de travailler ou de port de système annexe ). Le système décrit ci-après se préserve des perturbations de l'environnement industriel dans lequel il est implanté, car il est basé sur un système optique, et assure sa fonction première qui est de sécuriser les employés vis à vis du risque encouru. Ce système permet d'éviter des accidents par la détection d'une personne, consciente ou non, tombée sur le tapis roulant et/ou de le détecter s'il se retrouve enseveli ou disparaît au milieu de la zone de détection ( chute dans un trou ou une fosse par exemple ). Le procédé de détection cumule trois modes combinés et permet d'effectuer une alerte à un problème suivant trois cas différents.
1. cas : S'il y a déplacement d'une personne vers une zone dangereuse (par exemple zone prédéfinie sur l'image) et qu'elle atteigne cette zone, alors il y a détection, signalisation et arrêt des machines outils. Cette zone peut se trouver n'importe où dans l'image et peut être sous forme d'une surface ou sous forme de ligne matérialisant une limite à ne pas dépasser. Il suffit de connaître par avance la forme géométrique de la zone dangereuse
2. cas : S'il y a enfouissement de la personne sous les matériaux ou disparition de la personnes dans le champ de l'image suite à une chute, son absence parmi les N personnes présentes dans le champ de la caméra déclenche une détection, signalisation et arrêt des machines outils.
3. cas : S'il y a un nombre anormalement important de personnes autour de la zone de travail (par exemple dans le cas de visite On effectue alors, une signalisation et un arrêt des machines.

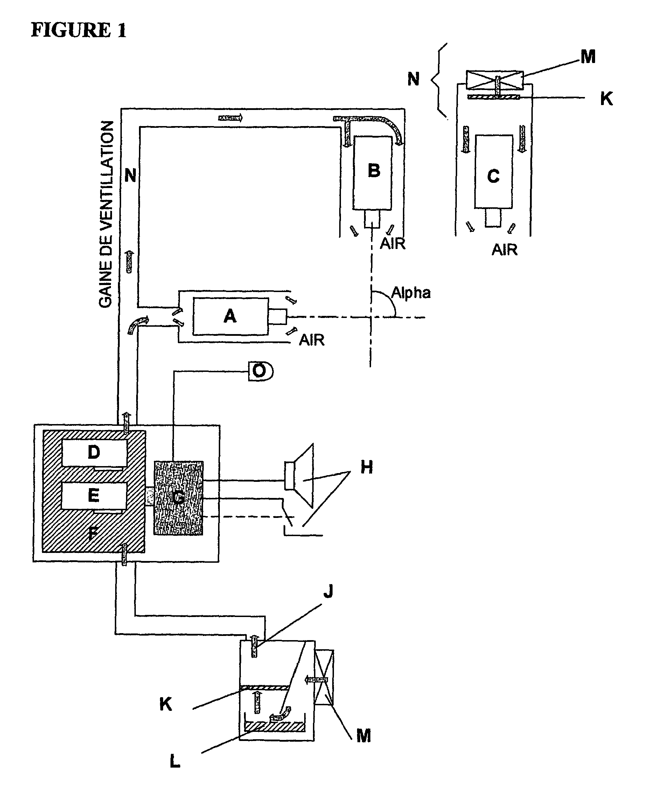

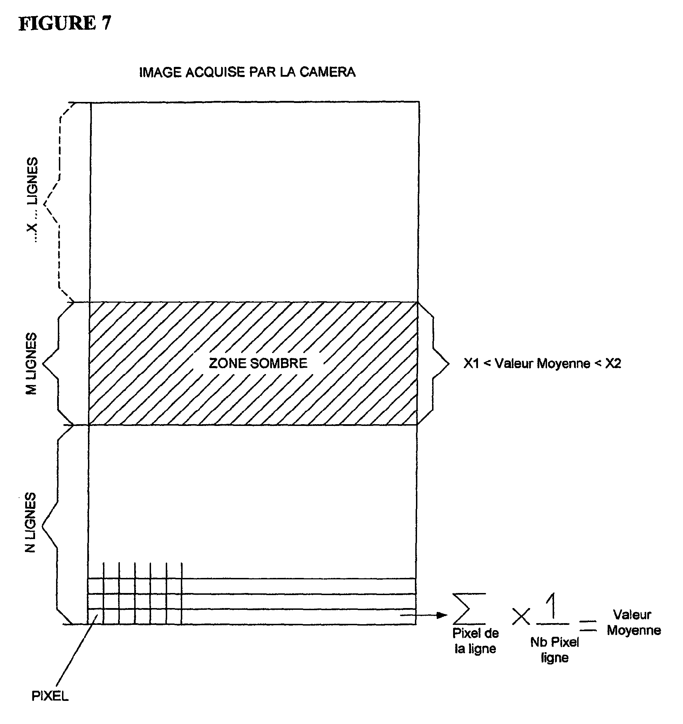

Le système est constitué par une ou plusieurs caméras vidéos couleurs (FIGURE 1 A, B et C) opérants dans le spectre visible dont la vitesse d'obturation et de l'ouverture du diaphragme de l'objectif varie en fonction de zones calculées qui découpent l'image acquise en fonction de la luminosité de celles-ci, d'une carte d'acquisition vidéo (FIGURE 1 D) ainsi que d'un calculateur (micro-ordinateur FIGURE 1 F) avec un logiciel de traitement d'image réalisé suivant des algorithmes propres au système (FIGURE 7). Des mesures de l'intensité lumineuse du site sont effectuées afin de modifier les valeurs d'étalonnage du logiciel suivant les conditions de luminosité et d'éclairement du site (FIGURE 1 C et G). De plus, afin de palier à l'environnement poussiéreux ( principal problème d'encrassement de la caméra), un système de ventilation (FIGURE 1 M) regroupant filtrage amont (par bain d'huile FIGURE 1 L et filtre mousse FIGURE 1 K), refroidissement du calculateur, et soufflante pour la caméra est intégrée dans la partie basse de la mécanique du système (FIGURE 1 J). L'air pulsé est convoyé vers les caméras par des gaines de ventilations ( FIGURE 1 K ). Les caméras peuvent posséder une soufflante d'appoint si elles sont trop éloignées du calculateur ( FIGURE 1 N ). Une mesure de luminosité extérieure permet de donner le type de temps ( Pluie, nuageux, soleil... )
Les caméras visualisent la zone de travail des ouvriers et ont un angle d'élévation supérieur à 5 degrés pour avoir une vue plongeante sur la zone à contrôler. Il y a une caméra principale (FIGURE 1 A) et des caméras secondaires (FIGURE 1 B et C). Au moins deux caméras sont placées de telle façon que leurs axes respectifs forment un angle approximativement orthogonal sur un plan horizontal pour réaliser un contrôle du champ de vision de la première caméra ( la caméra principale ) sur la zone sensible (Équivaut à reconstituer une image tridimensionnelle de la zone à contrôler). Un nombre de caméra supérieur pourra être implanté suivant la zone à surveiller ou pour surveiller plusieurs zones différentes. Un système de signalisation ainsi qu'un contact électrique de détection pour couper les machines outils sont fournis en sortie du calculateur à travers des cartes électroniques qui interfacent les signaux numériques aux commandes de puissance (FIGURE 1 E, G et H).
Le principe logiciel du système reste le même quel que soit la couleur à détecter, le nombre de caméra, le type de site et de machine-outils à surveiller.

Nous prendrons comme exemple, pour expliciter le fonctionnement du système, un tapis roulant avec deux caméras recherchant un gilet de signalisation jaune fluorescent.
Les images des caméras sont acquises l'une après l'autre. L'instant séparant deux images consécutives des deux caméras entre elles représente le temps d'acquisition du calculateur ( Deux lectures de la carte d'acquisition ). On considérera que les deux images fournies au calculateur ont été prises au même instant (Temps d'acquisition négligeable, inférieur à 45 millisecondes).

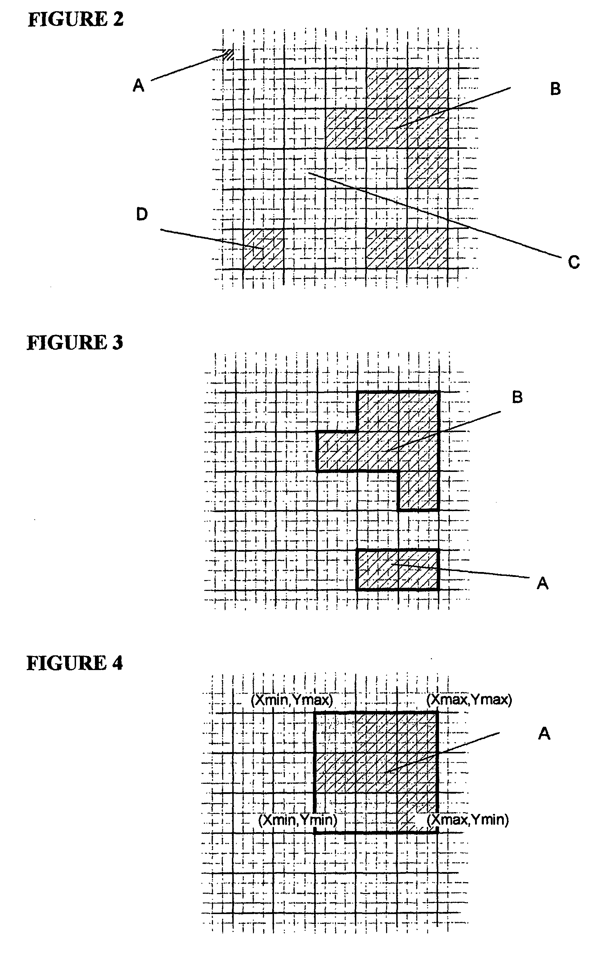

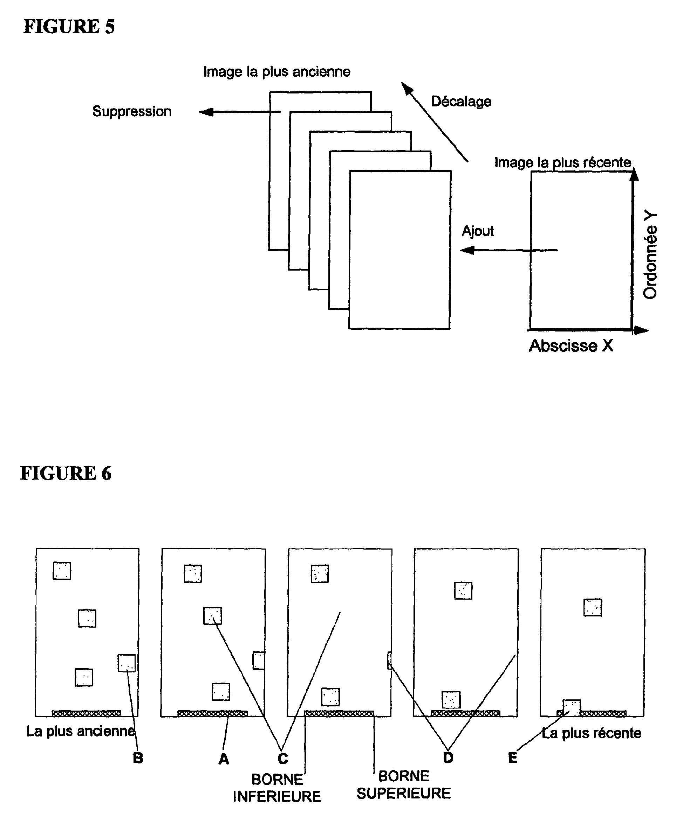

Le principe de traitement des images est le suivant :
- Dans un premier temps, on analyse l'ensemble des pixels de l'image et on modifie uniquement les pixels se rapprochant de la couleur dominante des éléments de signalisation de leurs vêtements (ou gilets de signalisation), dans notre exemple le jaune fluorescent (Couleur jaune visualisée par la caméra ). On effectue un « contraste » sur la couleur à détecter sur l'ensemble de l'image puis on compare chacun des pixels de l'image à deux valeurs correspondant à un encadrement de la couleur à détecter ( Dans notre exemple, le jaune fluorescent ). Si les pixels sont proches du jaune fluorescent ( couleur à détecter ), ils sont transformés en une couleur A ( par exemple en jaune pur ). Les pixels qui sont différents sont transformés en pixels d'une couleur B ( Par exemple en noir ). Afin que la luminosité ambiante ne vienne pas perturber la méthode d'analyse et afin de faire ressortir la couleur des vêtements du personnel, une méthode d'adaptation de l'acquisition de l'image est nécessaire. Pour cela, on découpe l'image en N zones. Chaque zone est définie par un nombre de ligne ( ou de colonne ) de l'image et représente les zones de luminosité plus ou moins intense sur l'image captée par la caméra. Ces zones sont calculées en temps réels à partir des équations de la position du soleil dans le ciel, de l'implantation du bâtiment dans lequel se trouve la zone dangereuse ( Latitude et longitude du site, position du bâtiment par rapport au sud, position des ouvertures sur les façades et les toitures du bâtiment ). La lumière entrant par les ouvertures du bâtiment, sur la zone dangereuse il se forme des zones plus ou moins ensoleillées qui correspondent à un étalonnage différent pour les valeurs encadrant la couleur à détecter, pour la vitesse d'obturation de l'objectif de la caméra, pour l'ouverture du diaphragme de la caméra ainsi que pour les valeurs caractéristiques utilisées dans les traitements ultérieurs comme le nombre de pixel du filtrage de la mosaïque. Chaque zone possède ses propres caractéristiques de traitements des pixels et d'adaptation des caméras. Les N zones calculées sont vérifiées en effectuant une moyenne de la luminosité des lignes ou des colonnes sur une image acquise. Pour cela, on transforme l'image couleur en image « niveau de gris », puis pour chaque ligne ou colonne, une moyenne de la valeur du niveau de gris est calculée (FIGURE 7). On parcourt ensuite l'image pour trouver les sauts importants de luminosité afin de déterminer les différentes zones lumineuses ou sombres. Les deux calculs étant redondants, on effectue un contrôle pour vérifier la cohérence des N zones déterminées.
   Pour chaque zone, les variations des éléments de traitement des pixels et d'adaptation de la caméra sont calculées en fonction des valeurs moyennes de la luminosité mesurée. Les valeurs sont étalonnées à partir d'un luxmètre ou tout autre appareil de mesure de la luminosité et dans des conditions de temps connues. Tous les paramètres variants en temps réel en fonction des mesures de luminosité qui sont, elles aussi, mesurées à travers une carte électronique en temps réel.
- Dans un deuxième temps, plusieurs images sont stockées afin d'effectuer une intégration temporelle pour relever l'image vraie par rapport au bruit. Cette intégration est effectuée de manière glissante pour éviter de perdre l'information contenue dans l'image.
- Dans un troisième temps, on applique à l'image résultat de l'intégration précédente, un effet mosaïque ( par exemple 4 pixels de coté ) et on effectue un filtre sur les carrés (FIGURE 2 A). Le nombre de pixel servant de filtrage, est configuré en fonction de chaque zone ( calculées précédemment ). Si chaque matrice de pixels (dans notre exemple matrice 4 X 4) contient un nombre suffisant de pixels jaunes ( filtre sur la densité de pixels sur la surface représentée par le carré mosaïque) on remplace l'ensemble des pixels de la matrice en une couleur unique, par exemple le jaune pur (FIGURE 2 D) qui possède un code RGB = {255, 255, 0}. Si le nombre de pixel jaune est inférieur à la densité attendue, alors on remplace l'ensemble des pixels par l'autre couleur choisie ( par exemple le noir RGB = {0,0,0}). Ensuite, on élimine les surfaces qui ne contiennent qu'une seule matrice isolée et qui se trouvent dans une des surfaces de couleur différente (FIGURE 2 D). Les surfaces supérieures à une matrice sont conservées dans l'image (FIGURE 2 B et C), ce qui équivaut à un filtrage sur la densité des surfaces en présences.
- Dans un quatrième temps, on regroupe parmi l'ensemble des carrés restants les matrices de couleur jaune afin de les regrouper en surface. Chaque surface contient les coordonnées des carrés qui la compose ( abscisse X, ordonnée Y ). Si la surface est trop petite ( Par exemple inférieure à une valeur Z calculée ), elle est éliminée car non significative d'un vêtement d'employé (FIGURE 3 A), ce qui équivaut à un filtrage sur la densité des surfaces. La valeur Z est calculée en fonction de la distance de la personne par rapport à la caméra. Plus l'employé est éloigné de la caméra, plus la taille de la surface gardée dans l'image est petite. De l'ensemble de ces matrices, on ressort des groupes de surface qui ont une forme quelconque (FIGURE 3 A B). On modélise ces surfaces sous forme géométrique simple. On garde uniquement les valeurs des abscisses et des ordonnées caractéristiques de la surface stylisée choisie ( ou sa formule mathématique ). Ceci permet de garder en mémoire un minimum de coordonnée de la surface par rapport à l'ensemble des coordonnées des matrices présentes dans cette surface (FIGURE 4). On peut à partir de ce traitement positionner la forme représentant un individu sur l'image vue par la caméra, à partir des coordonnées de la surface modélisée ou de son équation ( pour une forme de type « carré » : (Xₘᵢₙ, Yₘᵢₙ), (Xₘₐₓ, Yₘᵢₙ), (Xₘᵢₙ, Yₘₐₓ), (Xₘₐₓ, Yₘₐₓ)·
- Dans un cinquième temps, on garde une séquence d'image acquise par le calculateur de profondeur temporelle paramétrable en usine (par exemple cinq images) et on effectue une mémorisation glissante des images acquises en temps réel (FIGURE 5). Lorsqu'on a défini les surfaces présentes sur chaque image (FIGURE 6 B), on les comptabilise et on mémorise le nombre de « personnes » (représenté par les surfaces jaunes) présentes sur l'image prise par la caméra (FIGURE 6). Le positionnement de chaque surface par rapport aux images précédentes permet de connaître le déplacement des employés. La direction peut être calculée à partir des coordonnées de la surface sur la série d'images( par exemple, pour les surfaces stylisées sous forme de carré, en soustrayant les coordonnées minimums : X_{dir} = X_{min t} - X_{min t-1} et Y_{dir} = Y_{min t} - Y_{min t-1}). stylisées sous forme de carré, en soustrayant les coordonnées minimums : X_{dir} = X_{min t} - X_{min t-1} et Y_{dir} = Y_{min t} - Y_{min t-1})·
- Une cohérence temporelle est effectuée sur l'ensemble des images mémorisées des deux caméras afin de regrouper des surfaces retenues qui correspondent à d'autres surfaces ou pour garder des surfaces ayant disparues sur les images.
- La détection s'effectue lorsqu'une surface atteint la zone de détection ( par exemple avec une zone de détection FIGURE 6 1). La zone de détection pourra être sous la forme d'une limite à ne pas dépasser ou sous la forme d'une surface géométrique sur l'image à ne pas atteindre sinon, il y a activation d'une boucle pour signalisation d'accident (FIGURE 6 5).
   Si, sur l'image acquise à l'instant t, une des surfaces a disparue, il y a potentiellement enfouissement ou disparition de la personne (Nombre de surface comptabilisée inférieure dans l'image acquise à l'instant t) (FIGURE 6 3). Cette disparition est détecté uniquement si la surface qui disparaît n'est pas au bord de l'image acquise à l'instant t-1 ( Une des coordonnées de la surface différente de X = 0, Y = 0, X = Xₘₐₓ de l'image, et Y = Yₘₐₓ de l'image ) et si elle ne réapparaît pas. Dans le cas où une des coordonnées de la surface serait égale à une des coordonnées extrêmes de l'image, la personne est simplement sortie du champ de la caméra, et on considère qu'elle est hors de danger car suffisamment loin de la zone à risque ( FIGURE 6 4). Pour qu'il y ait déclenchement de la détection, signalisation et arrêt des machines-outils, on applique une recherche d'absence de la personne sur la séquence d'images mémorisées. Si la personne est absente sur les X-1 images mémorisées (quatre images pour cet exemple) alors il y a effectivement enfouissement ou chute de la personne. Cette vérification supprime le doute correspondant à un objet qui ferait écran temporairement entre la personne qui a disparu et la caméra. Ce problème est en réalité nul, car les caméras sont installées de façon à posséder un champ de vision sur la zone à surveiller tel qu'aucun obstacle ne bouche la vue de toutes les caméras en même temps. La position de ces caméras permet d'obtenir une image tridimensionnelle et ainsi éviter les fausses détections.
   Si un nombre de personne supérieur à celui autorisé par le chef d'entreprise est présent autour de la zone de travail considérée comme dangereuse, le nombre de surface jaune présente dans l'image va augmenter et dépasser un certain seuil (Nombre de personne signalisation et arrêt des machines outils.

La présente invention est susceptible d'être installée dans des centres de tris et de recyclage, dans des centres d'extraction de minerais, dans des zones aéroportuaires ou tout autre site susceptible de contenir un tapis roulant menant vers un appareillage dangereux pour l'homme.
Cet appareillage peut être installé sur des zones où la surveillance d'un personnel travaillant à proximité de machine outils ou autre système comme des incinérateurs est nécessaire à sa sécurité. Le système peut être installé dans des zones dangereuses où l'emploi de système conventionnel est impossible à cause de perturbations, tel que la poussière, tel que la variation importante de luminosité du site, nécessitant dans d'autre système de sécurité similaire une régulation lumineuse importante, tel que des perturbations électromagnétiques, ou encore une zone de détection importante.

## Revendications

1. Procédé de détection pour la sécurité des êtres humains travaillants dans des zones dangereuses difficilement contrôlables, basé par l'emploi d'une ou plusieurs caméras vidéos couleurs (FIGURE 1 A, B, C) dans le spectre de la lumière visible **caractérisé par** un traitement d'images en temps réel pour détecter et suivre le déplacement de la couleur des éléments de signalisation des vêtements des personnes travaillants sur zone dangereuse, par exemple le jaune fluorescent, sans ajout d'objet de détection particulier, et qui consiste à :
- Rechercher dans un premier temps les zones de couleur représentants les employés, les modéliser afin de situer les N personnes présentes sur l'image en effectuant un premier filtrage sur la couleur de chaque pixel de l'image, puis en effectuant un effet mosaïque (FIGURE 2), ensuite en réalisant un filtrage sur la densité des matrices de pixels retenus représentant les carrés mosaïques (FIGURE 3) et sur la densité des surfaces reconstituées et enfin en modélisant les surfaces conservées (FIGURE 4).
- D'effectuer une mémorisation glissante temporelle sur X images (FIGURE 5) prises par la caméra pour vérifier l'évolution du déplacement des surfaces de couleur (FIGURE 6 B D) ou leurs disparitions dans l'espace temps (FIGURE 6 C), ainsi que d'anticiper un éventuel problème dû à un surnombre de personne dans la zone de travail.

2. Procédé de détection pour la sécurité des êtres humains travaillants dans des zones dangereuses selon la revendication 1 et **caractérisé par** un contraste élevé sur la couleur recherchée, puis la recherche des pixels dont la couleur est comprise entre deux bornes auto-ajustables, représentants deux valeurs extrêmes de la couleur des vêtements du personnel. La variation des bornes de couleur est modifiée en fonction de la mesure de l'intensité lumineuse de la zone à contrôler à partir d'un appareil à base de capteur de luminosité et en fonction de la zone de l'image à traiter.

3. Procédé de détection pour la sécurité des êtres humains travaillants dans des zones dangereuses selon la revendication 1 et 2 et **caractérisé par** la découpe en zone distincte de l'image pour ajuster les bornes de couleur, la vitesse d'obturation de l'objectif de la caméra, l'ouverture du diaphragme de l'objectif de la caméra ainsi que les différentes constantes utilisées dans les traitements décrits ci-après à partir de mesures de luminosité intérieure et extérieure au bâtiment. Chaque zone est déterminée par deux méthodes :
- par le calcul des zones d'ombre et lumineuse issue des équations du soleil et de la position des ouvertures du bâtiment contenant la zone dangereuse et de la position du bâtiment sur la Terre.
- par une moyenne de l'image dans le sens des lignes ou colonnes après avoir transformé l'image en niveau de gris et effectué une moyenne sur les lignes ou les colonnes. La découpe en zone est effectuée par une recherche de saut important de la luminosité moyenne sur les lignes ou les colonnes

4. Procédé de détection pour la sécurité des êtres humains travaillants dans des zones dangereuses selon les revendications 1 à 3 et **caractérisé par** une intégration de plusieurs images mémorisées, puis un filtrage sur une densité de pixels après avoir effectué un effet mosaïque, puis un filtrage sur les matrices de couleur et enfin sur une densité de surface de couleur représentant la couleur du vêtement de travail du personnel. Le filtrage sur la densité des surfaces de couleur est fonction de la distance entre la personne à surveiller et la caméra.

5. Procédé de détection pour la sécurité des êtres humains travaillants dans des zones dangereuses selon les revendications 1 à 4 et **caractérisé par** une modélisation des surfaces de couleur, et ayant pour caractéristique les coordonnées ou l'équation de la forme géométrique de cette surface.

6. Procédé de détection pour la sécurité des êtres humains travaillants dans des zones dangereuses selon les revendications 1 à 5 et **caractérisé par** la recherche, sur les images mémorisées, du déplacement d'une des surfaces de couleur vers une zone de l'image dite zone de détection, qui peut être matérialisée par une surface ou une ligne dans l'image, effectuée et réalisée à partir des coordonnées ou des équations des surfaces modélisées par rapport à la position de la zone dite dangereuse dans l'image, afin de signaler et de stopper l'ensemble des machines dangereuses.
Cette détection est réalisée après avoir effectué une cohérence temporelle des surfaces captées par les caméras afin d'éviter une éventuelle obstruction du champ de vision des caméras et donc d'éviter les fausses détections.

7. Procédé de détection pour la sécurité des êtres humains travaillants dans des zones dangereuses selon les revendications 1 à 6 et **caractérisé par** la recherche sur les images mémorisées de l'absence de surface de couleur présente sur les X-1 images mémorisées, qui correspond à la disparition d'une personne, après avoir effectué une cohérence temporelle des surfaces captées par les caméras afin d'éviter une éventuelle obstruction du champ de vision des caméras et donc d'éviter les fausses détections.

8. Procédé de détection pour la sécurité des êtres humains travaillants dans des zones dangereuses selon les revendications 1 à 7 et **caractérisé par** la recherche sur les images mémorisées d'une trop forte concentration de surface de couleur présente sur les X-1 images mémorisées, correspondant à un nombre de personne trop élevé autour de la zone dangereuse après intégration des surfaces en présence sur l'ensemble des images, après avoir effectué une cohérence temporelle des surfaces captées par les caméras afin d'éviter une éventuelle obstruction du champ de vision des caméras et donc d'éviter les fausses détections.

9. Procédé de détection pour la sécurité des êtres humains travaillants dans des zones dangereuses selon les revendications 1 à 8 et **caractérisé par** la mise en place d'un système d'air pulsé à l'arrière des caméras ( FIGURE 1 1, 2 et 3 ) afin d'éviter aux poussières ambiantes présentes sur les zones dangereuses d'encrasser l'objectif de la caméra. L'air pulsé peut provenir du système de refroidissement du calculateur ( voir FIGURE 1 ) ou de système d'appoint fixé sur l'arrière de la caméra ( FIGURE 1 13 ).

10. Procédé de détection pour la sécurité des êtres humains travaillants dans des zones dangereuses selon les revendications 1 à 9 et **caractérisé par** l'auto adaptation de l'acquisition des images des caméras quelle que soit les conditions lumineuses de la zone de détection. Cette auto adaptation est effectuée en découpant l'image en plusieurs zones, en modifiant la vitesse d'obturation et l'ouverture du diaphragme de l'objectif de la caméra et des différentes valeurs numériques entrant dans les calculs de cette adaptation.

## Claims

1. - Process of detection for the safety of the human beings working in not easily controllable danger areas, based by the use of one or more cameras videos colors in the spectrum of the visible light **characterized by** an image processing in real time to detect and follow the displacement of the color of the signal devices of working clothing of the people on danger area, for example fluorescent yellow, without addition of particular object of detection, and which consists to :
- To seek initially the color areas representatives employees, to model them in order to locate the N persons present on the image by carrying out a first filtering on the color of each pixel of the image, then by carrying out a mosaic effect (FIGURE 2), then by carrying out a filtering on the density of the selected matrices of pixels representing the mosaic squares (FIGURE 3) and on the density of reconstituted surfaces and finally by modeling kept surfaces (FIGURE 4).
- To carry out a memorizing slipping temporal on X images (FIGURE 5) taken by the camera to check the evolution of the displacement of surfaces of color (FIGURE 6 2 and 4) or their disappearances in space time (FIGURE 6 3), or anticipating a possible problem due to an excess of persons in the working area.

2. - Process of detection for the safety of the human beings working in danger areas according to claim 1 and **characterized by** a raised contrast on the color to detect, then the research of the pixels whose color is included between two self-adjusting limits, two extreme values representatives of the clothing color of the personnel. The variation of the limits of color is modified according to the measurement of the light intensity of the dangerous area to control and measures from an equipment containing sensor of luminosity and according to the zone of the image to be treated ( parts of image ).

3. - Process of detection for the safety of the human beings working in danger areas according to the claim 1 and 2 and **characterized by** cutting in distinct part from the image for adjust color limits, the shutter speed of the objective of the camera, the diaphragm aperture of the objective of the camera as well as the various constants used in the treatments described hereafter from interior and external measurements of luminosity ( in and out the building ). Each zone is determined by two methods:
- by the calculation of the zones of shade and luminous resulting from the equations of the sun and the position from the openings of the building containing the danger area and the position of the building on the Earth.
- by an average of the image in the direction of the lines or columns after having transformed the image into gray level and having carried out an average on the lines or the columns. Cutting in zone is carried out by a search for significant jump of the average luminosity on the lines or the columns.

4. - Process of detection for the safety of the human beings working in danger areas according to claims' 1 to 3 and **characterized by** an integration of several images memorized, then a filtering on a density of pixels after having carried out a mosaic effect, then a filtering on the matrices of color and finally on a density of surface of color representing the color of the working clothes of the humans. Filtering on the density of color surfaces is function to the distance between the person to be supervised and the camera.

5. - Process of detection for the safety of the human beings working in danger areas according to claims' 1 to 4 and **characterized by** a modeling of surfaces of color, and having for characteristic the co-ordinates or the equation of the geometrical form of this surface.

6. - Process of detection for the safety of the human beings working in danger areas according to claims' 1 to 5 and **characterized by** research, on the images memorized, of the displacement of one of surfaces of color towards a part of the image known as zone of detection, which can be materialized by a surface or a line in the image, realized by the co-ordinates or the equations of the modeled surfaces compared to the position of the zone known as dangerous in the image, in order to signal and to stop the whole of the dangerous machines. This detection is realize after having realized a temporal coherence of the surfaces collected by the cameras in order to avoid a possible obstruction of the field of vision of the cameras and thus to avoid false detections.

7. - Proceeded of detection for the safety of the human beings working in danger areas according to claims' 1 to 6 and **characterized by** research on the images memorized of the absence of color surface present on X-1 memorized images, which corresponds to the disappearance of a person, after having carried out a temporal coherence of the surfaces collected by the cameras in order to avoid a possible obstruction of the field of vision of the cameras and thus to avoid false detections.

8. - Proceeded of detection for the safety of the human beings working in danger areas according to claims' 1 to 7 and **characterized by** research on the images memorized, a too strong concentration of color surface present on X-1 images memorized, corresponding to a number of anybody too high around the danger area after integration of surfaces on the whole of the images, after having carried out a temporal coherence of the surfaces collected by the cameras in order to avoid a possible obstruction of the field of vision of the cameras and thus to avoid false detections.

9. - Process of detection for the safety of the human beings working in danger areas according to claims' 1 to 8 and **characterized by** the installation of a system of air pulsated on the back of the cameras (FIGURE 1 1, 2 and 3) in order to avoid ambient dust present on the danger areas to clog the objective of the camera. The pulsated air can come from the system of cooling of the calculator (see FIGURE 1) or of auxiliary system fixed on the back of the camera (FIGURE 1 13).

10. - Process of detection for the safety of the human beings working in danger areas according to claims' 1 to 9 and **characterized by** the self-adjustment of the acquisition of the images acquire by cameras whatever the luminous conditions of the dangerous area This self-adjusting is carried out by cutting out the image in several parts, by modifying the shutter speed and the diaphragm aperture of the objective of the camera and the various numerical values using calculations of this adaptation.

## Patentansprüche

1. - Feststellungsverfahren für die Sicherheit von Menschen, die in schwer zu kontrollierenden Gefahrenzonen arbeiten, durch den Gebrauch von einer oder mehreren Farbvideokameras (ABBILDUNG 1 A, B, C) im Spektrum des sichtbaren. Lichts, das sich auszeichnet durch eine Bildverarbeitung in Echtzeit, um die Verschiebung der Farbe von Markierungselementen von Kleidung von Personen, die in der Gefahrenzone arbeiten, festzustellen und zu verfolgen, zum Beispiel das fluoreszierende Gelb, ohne ein besonderes Feststellungsobjekt; das Verfahren umfasst Folgendes:
- zunächst die Suche der Farbzonen, die die Angestellten repräsentieren, ihre Modellierung/ Entwicklung, um die N Personen, die auf den Bildern zu sehen sind, einzuordnen und zwar zunächst durch eine Filtrierung auf jeder Farbe eines jeden Bildpixels und dann durch einen Mosaikeffekt (ABBILDUNG 2), dann durch eine Filtrierung auf der Dichte von zurückgehaltenen Pixelmatrizen, die die Mosaik Quadrate repräsentieren (ABBILDUNG 3) und auf der Dichte der rekonstruierten Oberflächen und schließlich durch Modellierung der erhaltenen Oberfläche (ABBILIDUNG 4).
- Die Durchführung einer gleitenden zeitlichen Speicherung auf X Bildern (ABBILDUNG 5), aufgenommen durch die Kamera, um die Entwicklung der Verschiebung von Farboberflächen zu UberprUfen (ABBILDUNG 6, 2 und 4) oder ihre Auflösung / Verschwinden in der Zeitspanne (ABBILDUNG 6 3), sowie das Vorhersehen eines eventuellen Problems, das durch die üiberzahl an Personen in der Arbeitszone entsteht.

2. - Feststellungsverfahren zur Sicherheit der Menschen, die in den Gefahrenzonen arbeiten gemäß der Forderung 1 und das sich auszeichnet durch einen erhöhten Kontrast bezüglich der gesuchten Farbe, durch die Suche von Pixeln, deren Farbe sich zwischen zwei selbst-anpassenden Grenzen befindet, die zwei Extremwerte der Kleidungsfarbe des Personals repräsentieren. Die Schwankung von Farbwerten wird modifiziert entsprechend der Messung der Intensität der Lichtstärke der Zone, die mit einem Apparat auf Basis eines Helligkeitsaufnehmers kontrolliert wird und entsprechend der Zone des zu verarbeitenden Bildes.

3. - Feststellungsverfahren für die Sicherheit von Menschen, die in Gefahrenzonen arbeiten gemäß der Forderung 1 und 2 und das sich durch die Trennung in verschiedene Zonen des Bildes auszeichnet, um die Farbgrenzen, die verschlussgeschwindigkeit des Kameraobjektivs, die Öffnung der Blende des Kameraobjektivs sowie die verschiedenen Konstanten, die in der nachstehend beschriebenen Verarbeitung verwendet werden mit dem messen der inneren und äußeren Helligkeit des Gebäudes anzupassen. Jede Zone wird durch zwei methoden bestimmt:
- durch Berechnung von Licht- und Schattenzonen, die entstehen durch die Gleichungen der Sonne und der Position der Öffnungen des Gebäudes, das die Gefahrenzone enthält und der Position des Gebäudes auf der Erde.
- durch einen mittelwert des Bildes den Zeilen oder Spalten nach nachdem das Bild in eine Grauzone umgewandelt wurde und ein mittelwert bezüglich der Zeilen und Spalten ermittelt wurde. Die Trennung in Zonen wird durchgeführt durch eine Suche eines wichtigen Sprungs der durchschnittlichen Helligkeit bezüglich der Zeilen oder der Spalten.

4. - Feststellungsverfahren für die Sicherheit von menschen, die in Gefahrenzonen arbeiten gemäß den Forderungen 1 bis 3 und das sich auszeichnet durch eine Integrierung mehrerer gespeicherter Bilder, durch eine Filtrierung auf einer Pixeldichte nachdem ein mosaikeffekt erzeugt wurde, durch eine Filtrierung auf den Farbmatrizen und schließlich auf einer Dichte der Farboberfläche, die die Farbe der Arbeitskleidung der mitarbeiter repräsentiert. Die Filtrierung auf der Dichte von Farboberflächen hängt ab von der Distanz zwischen der zu Uberwachenden Person und der Kamera.

5. - Feststellungsverfahren für die Sicherheit von menschen, die in Gefahrenzonen arbeiten gemäß den Forderungen 1 bis 4 und das sich auszeichnet durch eine modellierung von Farboberflächen und durch die Koordinaten oder die Gleichung der geometrischen Form dieser Oberfläche.

6. - Feststellungsverfahren für die Sicherheit von menschen, die in Gefahrenzonen arbeiten gemäß den Forderungen 1 bis 5 und das sich auszeichnet durch die Suche, auf den gespeicherten Bildern, nach der Verschiebung einer der Farboberflächen hin zu einer Bildzone, der sogenannten Feststellungszone, die zum Ausdruck gebracht werden kann durch eine Oberfläche oder eine Zeile im Bild, erzeugt und durchgeführt durch Koordinaten oder Gleichungen von modellierten Oberflächen im Verhältnis zur Position der sogenannten gefährlichen Zone im Bild, um auf die gesamten gefährlichen Maschinen hinzuweisen und sie anzuhalten. Diese Feststellung wird realisiert nach Erzeugung einer zeitlichen Kohärenz von Oberflächen, die von den Kameras eingefangen werden, um eine mögliche Behinderung des Blickfelds von Kameras und somit auch die falschen Feststellungen zu verhindern.

7. - Feststellungsverfahren für die Sicherheit von Menschen, die in Gefahrenzonen arbeiten gemäß den Forderungen 1 bis 6 und das sich auszeichnet durch die Suche in den gespeicherten Bildern nach fehlender Farboberfläche auf den gespeicherten X-1 Bildern, die dem Verschwinden einer Person entsprechen, nach der Erzeugung einer zeitlichen Kohärenz von Oberflächen, die durch die Kameras eingefangen werden, um eine mögliche Behinderung des Blickfeldes von Kameras und somit die falschen Feststellungen zu verhindern.

8. - Feststellungsverfahren für die Sicherheit von Menschen, die in Gefahrenzonen arbeiten gemäß den Forderungen 1 bis 7 und das sich auszeichnet durch die Suche in den gespeicherten Bildern nach einer zu starken Farbober flächenkonzentration auf den gespeicherten x-1 Bildern, die einer zu hohen Anzahl von Personen um die Gefahrenzone herum entspricht nach der Integrierung von sich gegenüberstehenden Oberflächen auf den gesamten Bildern, nachdem eine zeitliche Kohärenz von Oberflächen geschaffen wurde, die von den Kameras eingefangen wurde, um eine mögliche Behinderung des Blickfelds von Kameras und somit die falschen Feststellungen zu verhindern.

9. - Feststellungsverfahren für die Sicherheit von Menschen, die in Gefahrenzonen arbeiten gemäß den Forderungen 1 bis 8 und das sich auszeichnet durch die Einführung eines Warmluftsystems im hinteren Teil der Kameras ( ABBILDUNG 1 1,2 und 3), um zu verhindern, dass Umgebungsstaub, der sich in den Gefahrenzonen befindet, das Objektiv der Kamera verschmutzt. Die Warmluft kann aus dem Abkühlungssystem des Rechners kommen (siehe ABBILDUNG 1) oder von dem zusätzlichen System im hinteren Teil der Kamera (ABBILDUNG 1 13).

10. - Feststellungsverfahren für die Sicherheit von Menschen, die in Gefahrenzonen arbeiten gemäß den Forderungen 1 bis 9 und das sich auszeichnet durch die Selbstanpassung des Zugangs/ Erwerbs von Kamerabildern und zwar unabhängig der Lichtverhältnisse der feststellugnszone. Diese Seibstanpassung wird erzielt durch das Trennen des Bildes in mehrere Zonen wobei die geschwindigkeit des Verschlusses und der Öffnung der Blende des Objektivs der Kamera und die verschiedenen Zahlenwerte, die in die Berechnung dieser Anpassung eingehen, modifiziert werden.
